# EUROPÄISCHE PATENTSCHRIFT

(11) **EP 4 145 974 B1**
(45) Veröffentlichungstag und Bekanntmachung des Hinweises auf die Patenterteilung: **12.08.2026**
(21) Anmeldenummer: 21727354.9
(22) Anmeldetag: 07.05.2021
(51) Int. Cl.: A01C 7/12

(54) **DOSIERVORRICHTUNG FÜR EINE LANDWIRTSCHAFTLICHE MASCHINE**
DOSING DEVICE FOR AGRICULTURAL MACHINE
DISPOSITIF DE DOSAGE POUR MACHINE AGRICOLE

(30) Priorität: 08.05.2020 DE 102020002762
(43) Veröffentlichungstag der Anmeldung: 15.03.2023
(73) Patentinhaber: Lemken GmbH & Co KG, 46519 Alpen (DE)
(72) Erfinder: GOTZEN, Christian, 41751 Viersen (DE); BERGERFURTH, Dennis, 46459 Rees (DE); VALTWIES, Bernd, 48703 Stadtlohn (DE)
(86) Internationale Anmeldenummer: PCT/DE2021/100420
(87) Internationale Veröffentlichungsnummer: WO 2021/223817

(56) Entgegenhaltungen:
- EP-A1- 3 384 748
- EP-B1- 2 152 615
- US-A1- 2005 263 052
- US-A1- 2019 297 773
- US-B2- 9 801 330

## Beschreibung

Die vorliegende Erfindung betrifft eine Dosiervorrichtung für eine landwirtschaftliche Maschine zur Ausbringung von körnigen Feststoffen.

Körnige Feststoffe, beispielsweise in Form von Saatgut oder Dünger, werden übelicherweise aus einem Vorratsbehälter zu einer oder mehreren Abgabeeinheiten mittels eines Fördersystems transportiert. Hierfür werden mechanische Fördersysteme oder häufig auch pneumatische Fördersysteme eingesetzt, welche den körnigen Feststoff mittels eines Gebläses über Verbindungsleitungen von dem Vorratsbehälter, beispielsweise durch eine Verteilvorrichtung und einer dort angeschlossenen Mehrzahl an Leitungen, zu den jeweiligen Ausgabeeinheiten fördern. Eine Zufuhr des körnigen Feststoffs aus dem Vorratsbehälter in das Fördersystem wird dabei mittels einer Dosiervorrichtung gesteuert. Derartige Fördersysteme sind aus der EP 3 384 748 A1, der US 2019/297773 A1, der EP 2 152 615 B1, der US 9 801 330 B2 oder der US 2005/263052 A1 bekannt.

Weiterhin ist aus der EP 1570716 A2 eine gattungsgemäße landwirtschaftliche Maschine mit einer Dosiervorrichtung zur Verteilung eines körnigen Feststoffes bekannt. Diese Maschine zur Verteilung eines körnigen Feststoffes weist eine Dosiervorrichtung mit einem oder mehreren auswechselbaren Zellenrädern auf. Die Zellenräder sind in einem Gehäuse angeordnet. Das jeweils in dem Gehäuse angeordnete Zellenrad kann nach Abnahme einer Lagerplatte aus einer seitlichen Öffnung in axialer Richtung aus dem Gehäuse herausgenommen werden. Eine Dosierung des auszubringenden Feststoffes erfolgt dabei lediglich über das Zellenrad, wobei eine Veränderung der auszubringenden Menge lediglich über die Drehzahl der Zellenräder und durch den Einsatz unterschiedlicher Zellenräder möglich ist, wofür jedoch jedesmal eine Unterbrechung des Arbeitsprozesses und eine aufwändige

Demontage des eingebauten Zellenrades und anschließende Montage eines neuern Zellenrades erforderlich ist.

Es ist daher die Aufgabe der vorliegenden Erfindung, eine Dosiervorrichtung für eine landwirtschaftliche Maschine bereitzustellen, welche eine kostengünstige Herstellung, eine verbesserte Einstellmöglichkeit und Montage der Dosiervorrichtung ermöglicht.

Die Aufgabe wird gelöst durch eine Dosiervorrichtung gemäß den Merkmalen des Anspruches 1. Vorteilhafte Ausgestaltungen der Erfindung sind in den Unteransprüchen angegeben.

Eine Dosiervorrichtung für eine landwirtschaftliche Maschine zur Ausbringung von körnigen Feststoffen aus mindestens einem Vorratsbehälter zu mindestens einer Abgabeeinheit mittels eines, insbesondere pneumatischen, Fördersystems, umfaßt ein Dosiergehäuse, wobei das Dosiergehäuse mindestens einen vorratsbehälterseitigen und/oder fördersystemseitigen Befestigungsflansch sowie mindestens eine Zulauföffnung und mindestens eine Auslassöffnung für den körnigen Feststoff aufweist. Gemäß der Erfindung ist der mindestens eine Befestigungsflansch als Vieleck oder kreisförmig ausgebildet.

Das Dosiergehäuse ist mindestens über einen Befestigungsflansch mit dem Vorratsbehälter oder dem Fördersystem, insbesondere einer Verbindungsleitung des Fördersystems, verbunden. Der Befestigungsflansch in Form eines Vielecks kann entlang seines Umfangs drei oder mehr als vier Ecken aufweisen. Die Ecken können gleichmäßig oder ungleichmäßig entlang des Umfanges des Befestigungsflansches angeordnet sein. Dies ermöglicht es, das Dosiergehäuse schrittweise gedreht zu montieren, wodurch der vorhandene Bauraum vorteilhaft ausgenutzt werden kann.

Beispielsweise können benachbarte Dosiervorrichtungen gedreht zueinander und dadurch seitlich dichter nebeneinander plaziert werden, wodurch der benötigte Bauraum pro Dosiervorrichtung in seitlicher Richtung reduziert werden kann. Durch einen kreisförmig ausgebildeten Befestigungsflansch kann eine stufenlose Ausrichtung des Dosiergehäuses relativ zu einem Vorratsbehälter oder Fördersystem, beispielsweise Verbindungsleitungen, erfolgen. Dies hat den Vorteil, dass der vorhandene Bauraum noch besser genutzt werden kann.

In einer bevorzugten Ausgestaltung der Erfindung sind die mindestens eine Zulauföffnung und/oder die mindestens eine Auslassöffnung innerhalb eines Befestigungsflansches angeordnet. Eine Zulauföffnung und/oder Auslassöffnung kann dabei innerhalb oder außerhalb des Befestigungsflansches angeordnet sein. Denkbar ist, dass mehrere Öffnungen innerhalb oder zumindest teilweise innerhalb des Befestigungsflansche angeordnet sein können, wodurch eine hohe Flexibilität bei der Ausnutzung des verfügbaren Bauraumes ermöglicht wird. Der Befestigungsflansch umschließt dabei außenseitig die jeweilige Öffnung oder Öffnungen. Hierdurch kann der Befestigungsflansch einen großen Durchmesser aufweisen, wodurch eine stabile und zuverlässige Montage der Dosiervorrichtung ermöglicht werden kann.

In einer besonders bevorzugten Ausgestaltung der Erfindung ist ein zweiter, dem ersten Befestigungsflansch gegenüberliegender, Befestigungsflansch vorgesehen, welcher als Vieleck oder kreisförmig ausgebildet ist. Durch einen zweiten Befestigungsflansch kann sowohl vorratsbehälterseitig als auch fördersystemseitig jeweils ein Befestigungsflansch angeordnet sein, wodurch eine optimale Ausrichtung der Dosiervorrichtung und/oder des Fördersystems beispielsweise relativ zu dem Vorratsbehälter ermöglicht werden kann. Der zweite Befestigungsflansch in Form eines Vielecks kann dabei entlang seines Umfangs drei oder mehr als vier Ecken aufweisen. Die Ecken können gleichmäßig oder ungleichmäßig entlang des Umfanges des Befestigungsflansches angeordnet sein. Dies ermöglicht es, das Dosiergehäuse schrittweise gedreht zu montieren, wodurch der vorhandene Bauraum vorteilhaft ausgenutzt werden kann.

In einer weiteren Ausgestaltung der Erfindung ist der Befestigungsflansch derart ausgebildet, dass dieser mittels eines, insbesondere den Befestigungsflansch umschlingenden, Befestigungsmittels montierbar ist. Der Befestigungsflansch kann beispielsweise eine sich nach radial außen erstreckende, insbesondere umlaufende, Auskragung ausbilden. Diese Auskragung kann zumindest teilweise von dem Dosiergehäuse, dem Vorratsbehälter und/oder dem Fördersystem ausgebildet sein. Das Befestigungsmittel kann diese Auskragung entlang ihres Umfangs teilweise oder vollständig umfassen und lösbar ausgestaltet sein. Ein Befestigungsmittel kann dabei in Form eines Clips, welche entlang des Umfanges angeordnet sein können, oder einer, insbesondere ringförmigen oder vieleckigen, Schelle ausgebildet sein. Der Befestigungsflansch, die Auskragung und/oder das Befestigungsmittel können dabei in Form eines Konusflansches und/oder einer konusförmigen Schelle ausgestaltet sein, wodurch eine Selbstzentrierung und/oder Klemmung bei der Montage erreicht werden kann, wodurch dies vereinfacht werden kann.

In einer besonders bevorzugten Ausgestaltung der Erfindung ist das Befestigungsmittel in Form eines Schnellspannverschlusses ausgebildet. Ein Schnellspannverschluss kann zumindest teilweise an den Formverlauf des Befestigungsflansches angepaßt und in Form eines Schnellspannklips oder einer Schnellspannschelle ausgestaltet sein.

In einer besonders bevorzugten Ausgestaltung der Erfindung bildet das Dosiergehäuse innenseitig eine Dosierkammer aus, wobei zwischen Dosierkammer und dem Fördersystem eine, um eine Drehachse, rotierende Fördereinrichtung angeordnet ist, wobei die Fördereinrichtung die mindestens eine Zulauföffnung und die mindestens eine Auslassöffnung, insbesondere druckdicht, voneinander trennt. Die Dosierkammer weist, insbesondere bodenseitig, eine Kammeröffnung auf, welche unmittelbar an die im Dosiergehäuse gelagerte Fördereinrichtung angrenzt, und durch welche der körnige Feststoff mittels Förderelementen in die Fördereinrichtung gelangen kann. Ein für den Zulauf des körnigen Feststoffes in die Fördereinrichtung wirksamer Querschnitt der Kammeröffnung kann durch einen Drehschieber, und insbesondere eine Öffnung des Drehschiebers, eingestellt werden. Hierdurch kann eine in die Fördereinrichtung zulaufende Menge an körnigem Feststoff eingestellt werden. Durch die rotierende Fördereinrichtung kann die Menge an körnigem Feststoff, welche in das Fördersystem eingeleitet werden soll, rotationsabhängig dosiert werden. Eine druckdichte Ausgestaltung ist besonders bei einem pneumatischen Fördersystem von Vorteil, um einen vorratsbehälterseitigen Bereich und einen fördersystemseitigen Bereich drucktechnisch zu trennen und eine wechselseitige Beeinflussung zu vermeiden.

Das Dosiergehäuse ist mehrteilig ausgebildet, wobei das Dosiergehäuse aus zwei, im Wesentlichen spiegelbildlichen und/oder formgleichen, Teilkörpern ausgebildet ist. Durch ein mehrteiliges Gehäuse können Herstellung und Montage optimiert werden. Besonders bei einem Dosiergehäuse, welches aus mehreren, beispielsweise einem ersten und einem zweiten, Teilkörpern aufgebaut ist, können durch Gleichteile, also spiegelbildlich oder formgleiche Teilkörper, Kosten bei der Herstellung reduziert werden. Zudem können durch Austausch eines Teilkörpers auf einfache Weise Anpassungen zur Funktionserweiterung an dem Dosiergehäuse vorgenommen werden.

In einer weiteren bevorzugten Ausgestaltung der Erfindung ist eine Trennebene der Teilkörper des Dosiergehäuses im Wesentlichen unter einem Winkel zu der Drehachse angeordnet. Die Trennebene, welche in einer Kontaktfläche zwischen den Teilkörpern angeordnet ist, kann beispielsweise im Wesentlichen parallel oder rechtwinklig zu der Drehachse angeordnet sein. Denkbar ist auch jeder andere Winkel bezogen auf die Drehachse, beispielsweise im Wesentlichen 30° oder 45°. Durch geeignete Anordnung der Trennebene, beispielsweise im Wesentlichen parallel oder rechtwinklig zur Drehachse, wobei die Trennebene insbesondere mittig durch an dem Dosiergehäuse angeordnete Gewinde verläuft, können die Teilkörper zum Beispiel als Bauteile, insbesondere als Spritzgußbauteile oder Umformteile, hergestellt werden, welche mit konstruktiv einfachen, schieber- oder hinterschnittarmen- oder schieber- oder hinterschnittfreien Formen kostengünstig hergestellt werden können. Zudem könnten die Bauteile mit Ausformschrägen ausgestaltet sein, wodurch weniger oder keine Auswerfer aus den Formen benötigt würden, wodurch die Herstellungskosten weiter gesenkt werden könnten.

Gemäß einer weiteren Ausgestaltung der Erfindung weist das Dosiergehäuse mindestens eine Ablauföffnung auf, welche insbesondere in der Trennebene der Teilkörper des Dosiergehäuses angeordnet ist. Die mindestens eine Ablauföffnung kann zwischen der Fördereinrichtung und der Zulauföffnung angeordnet und kann so das Innere des Dosiergehäuses beispielsweise mit der Umgebung verbinden, um ein vereinfachtes Entleeren des Dosiergehäuses durch ein Ablaufen des körnigen oder pulverigen Feststoffes durch die Ablauföffnung zu ermöglichen. Die Ablauföffnung kann aus dem Dosiergehäuse herausragen und ein Gewinde oder andere Formschlusselemente zur Aufnahme eines Ablaufstopfens als Verschluß aufweisen. Das Gewinde kann beispielsweise als Außengewinde oder Innengewinde ausgebildet sein. Die Ablauföffnung kann in der Trennebene der Teilkörper des Dosiergehäuses angeordnet sein, wobei das Gewinde zu gleichen Teilen in Trenneben angeordnet sein kann, wodurch dieses kostengünstig bei der Herstellung mit ausgeformt werden kann.

In einer weiterhin bevorzugten Ausgestaltung der Dosiervorrichtung bildet das Dosiergehäuses eine Dosierkammer aus, und ist innerhalb der Dosierkammer mindestens ein, insbesondere lösbares, Trennelement angeordnet. Die Dosierkammer kann zwischen der Zulauföffnung und der Fördereinrichtung angeordnet sein, um den Feststoff der Fördereinrichtung zuzuführen. Das Trennelement kann die Dosierkammer in zwei Bereiche unterteilen, in welchen unterschiedliche Feststoffe eingebracht und der Fördereinrichtung zugeführt werden können. Durch Schieber- oder Begrenzungselemente, insbesondere durch einen Drehschieber, kann bei geteilter Dosierkammer beispielsweise aus einer ersten Teilkammer und/oder einer zweiter Teilkammer jeweils Feststoff der Fördereinrichtung zugeführt werden, wobei je nach Ausrichtung des Trennelementes eine Förderung der Feststoffe mit allen oder einem Teil der Dosierelemente erfolgen kann. Das Trennelement kann in den Teilkörpern des Dosiergehäuses gelagert sein, und im Wesentlichen parallel oder in einem, insbesondere rechten, Winkel zu der Drehachse angeordnet sein. Das Trennelement kann einstückig oder mehrteilig, insbesondere jeweils anteilig in einem Teilkörper angeformt, ausgebildet sein. Durch das Trennelement können ein oder mehrere Feststoffe der Fördereinrichtung zugeführt werden, ohne dass ein zeitaufwendiges Umstellen oder Reinigen der Dosiervorrichtung erforderlich ist.

Vorzugsweise weist das Dosiergehäuse in einer weiteren Ausgestaltung der Erfindung fördersystemseitig der Fördereinrichtung eine weitere Auslassöffnung und/oder eine Bypassöffnung auf. Die weitere Auslassöffnung kann zwischen der Fördereinrichtung und dem Fördersystem angeordnet sein, um beispielsweise den Anschluß der Dosiervorrichtung an eine weitere Verbindungsleitung zu ermöglichen.

Hierdurch kann ein körniger Feststoff in eine weitere oder ein zweiter körniger Feststoff in eine separate Verbindungsleitung dosiert werden. Die Bypassöffnung kann derart in dem Dosiergehäuse, insbesondere an der Fördereinrichtung, angeordnet und ausgebildet sein, dass ein körniger Feststoff durch die Fördereinrichtung aus dem Dosiergehäuses herausgefördert wird, ohne dabei in das Fördersystem zu gelangen. Die Bypassöffnung kann aus dem Dosiergehäuse, insbesondere durch einen Befestigungsflansch, in die Umgebung herausgeführt werden. Durch die Bypassöffnung kann beispielsweise eine Abdrehprobe zur Kalibrierung der dosierten Menge an körnigem Feststoff durchgeführt werden. Zudem kann ein Entleeren der Dosiervorrichtung ermöglicht werden, ohne dass körniger Feststoff in das Fördersystem gelangt. Die erste Auslassöffnung, die weitere Auslassöffnung und/oder die Bypassöffnung können durch einen Schieber, insbesondere Drehschieber, geöffnet oder geschlossen werden.

In einer bevorzugten Ausgestaltung der Erfindung ist fördersystemseitig der Fördereinrichtung eine Trennvorrichtung vorgesehen. Die Trennvorrichtung kann, insbesondere fördersystemseitig, an der Fördereinrichtung zwischen Auslassöffnungen angeordnet sein und ermöglicht ein getrenntes Dosieren von körnigen Feststoffen. Die Trennvorrichtung kann als flächiges Element ausgebildet sein und innerhalb mindestens einer Verbindungsleitung angeordnet sein, wobei die Trennvorrichtung bis an die Fördereinrichtung heranreichen kann. Durch die Trennvorrichtung kann eine Abtrennung der mindestens einen Auslassöffnung und/oder Bypassöffnung erfolgen, um eine störungsfreie Förderung des Feststoffe zu ermöglichen. Die Trennvorrichtung kann innerhalb einer Verbindungsleitung angeordnet sein, um getrennte Förderwege auszubilden.

In einer weiter bevorzugten Ausgestaltung der Erfindung ist innerhalb der Dosierkammer, insbesondere vorratsbehälterseitig, mindestens eine antreibbare Rührwelle angeordnet. Die Rührwelle kann um eine Rührachse drehen, um den Feststoff in der Dosierkammer aufzulockern und die Dosierung zu verbessern. Die Rührwelle kann parallel zur Drehachse angeordnet sein, und insbesondere jeweils in einem Teilkörper des Dosiergehäuses gelagert sein. Bevorzugt wird die Rührwelle gemeinsam mit der Fördereinrichtung oder den Dosierelementen, insbesondere über ein Riemen-, Ketten- oder Zahnradvorgelege angetrieben. Ein Vorgelege ermöglicht die Einstellung eines Übersetzungsverhältnises zwischen Dosierelement und Rührwelle, um die Rührintensität positiv zu beinflussen.

Die Erfindung betrifft weiterhin eine landwirtschaftliche Maschine zur Ausbringung von körnigen Feststoffen mit einem, insbesondere pneumatischen, Fördersystem zur Beförderung der körnigen Feststoffe aus einem Vorratsbehälter zu einer Anzahl von Abgabeeinheiten mit mindestens einer Dosiervorrichtung, welche wie vorstehend aus- und weitergebildet ist.

In einer bevorzugten Ausgestaltung der landwirtschaftlichen Maschine sind der mindestens einen Dosiervorrichtung eine oder mehrere Abgabeeinheiten und/oder Verteilvorrichtungen zugeordnet. Diese können beispielsweise in Form von Scharen oder sogenannten Sternverteilern ausgebildet sein.

Die Erfindung wird nachfolgend anhand von Ausführungsbeispielen näher erläutert.

In den Figuren zeigt:
- Figur 1: eine landwirtschaftliche Maschine mit einer erfindungsgemäßen Dosiervorrichtung in einer schematischen Seitenansicht;
- Figur 2: eine perspektivische, schematische Ansicht einer Dosiervorrichtung;
- Figur 3: eine schematische Draufsicht auf eine Dosiervorrichtung mit einem Trennelement;
- Figur 4: eine perspektivische, schematische Darstellung eines ersten Drehschiebers;
- Figur 5: eine perspektivische, schematische Darstellung der Fördereinrichtung;
- Figur 6: eine perspektivische Seitenansicht einer Dosiervorrichtung mit einer Trennvorrichtung;
- Figur 7: eine perspektivische Darstellung des ersten Drehschiebers, welcher koaxial innerhalb eines zweiten Drehschiebers angeordnet ist; und
- Figur 8: eine perspektivische, schematische Ansicht des zweiten Drehschiebers mit einer alternativ ausgestalteten Kante.

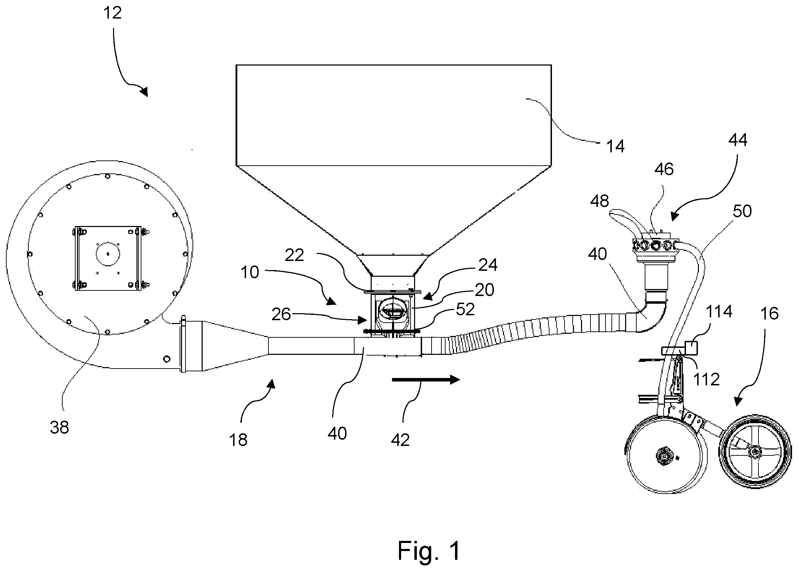

In Figur 1 ist eine landwirtschaftliche Maschine 12 in Form einer Sämaschine in schematischer Seitenansicht dargestellt. In einem Vorratsbehälter 14 befindet sich mindestens ein körniger oder pulverförmiger Feststoff, beispielsweise in Form von Saatgut und/oder Dünger. Der körnige Feststoff wird mittels eines mechanischen oder pneumatischen Fördersystems 18 zu mindestens einer Abgabeeinheit 16 gefördert, wo der körnige Feststoff beispielsweise durch Säschare in den Boden eingebracht werden kann. Das in Fig. 1 dargestellte Fördersystem 18 ist ein pneumatisches Fördersystem 18, bei dem der körnige Feststoff mittels eines Luftstromes, der durch ein Gebläse 38 erzeugt wird, in Förderrichtung 42 durch mindestens eine Verbindungsleitung 40 zu mindestens einer Abgabeeinheit 16 gefördert wird. Der körnige Feststoff wird hierzu durch eine Verbindungsleitung 40 zu mindestens einer Verteilvorrichtung 44 geleitet, in welcher in einer Verteilkammer 46 eine im Wesentlichen gleichmäßige Verteilung des körnigen Feststoffes auf eine Anzahl Verteilöffnungen 48 und daran angeschlossene Leitungen 50 erfolgt. Durch die Leitungen 50 wird der körnige Feststoff weiter bis zu den Abgabeeinheiten 16 geführt. Bei den Abgabeeinheiten 16 kann es sich beispielsweise um Säschare handeln. Der körnige Feststoff kann von dem Luftstrom mit Strömungsgeschwindigkeiten von bis zu 30 m/s bewegt werden.

Aus dem Vorratsbehälter 14 wird der körnige Feststoff mittels einer Dosiervorrichtung 10 in das Fördersystem 18 gefördert, wobei eine genaue Dosierung der Menge des geförderten Feststoffes erfolgt. Die Dosiervorrichtung 10 ist dabei zwischen dem Vorratsbehälter 14 und dem Fördersystem 18 angeordnet, wobei in der in Figur 1 gezeigten landwirtschaftlichen Maschine 12 der körnige Feststoff im Wesentlichen durch die Schwerkraft aus dem Vorratsbehälter 14 der Dosiervorrichtung 10 zugeführt wird. Zur Zufuhr des körnigen Feststoffes weist die Dosiervorrichtung 10 ein Dosiergehäuse 20 mit mindestens einer vorratsbehälterseitigen Zulauföffnung 24 auf. Der dosierte körnige Feststoff wird durch mindestens eine fördersystemseitig in dem Dosiergehäuse 20 angeordnete Auslassöffnung 26 in das Fördersystem 18 abgegeben. Zur vorratsbehälterseitigen und/oder fördersystemseitigen Befestigung an dem Vorratsbehälter 14 und/oder dem Fördersystem 18 weist das Dosiergehäuse 20 Befestigungsflansche 22, 52 auf.

Gemäß der Erfindung sind der vorratsbehälterseitige erste Befestigungsflansch 22 und der fördersystemseitige zweite Befestigungsflansch 52 kreisförmig ausgebildet. Eine Ausgestaltung in Form eines Vielecks, insbesondere mit drei oder mehr als vier Ecken, wäre ebenfalls denkbar. Hierdurch kann die Dosiervorrichtung 10, bezogen auf den Vorratsbehälter 14 und/oder das Fördersystem 18, insbesondere schrittweise oder stufenlos, gedreht angeordnet werden. Zur Regelung einer Ausbringmenge der Dosiervorrichtung 10 weist die landwirtschaftliche Maschine 12 abgabeeinheitsseitig der Dosiervorrichtung 10 mindestens ein an eine Auswerteelektronik 114 angeschlossenen Sensor 112 auf, durch welchen eine dosierte Menge des körnigen Feststoffes detektierbar ist und insbesondere die Fördereinrichtung 32 aufgrund der detektierten Menge des körnigen Feststoffes steuerbar ist.

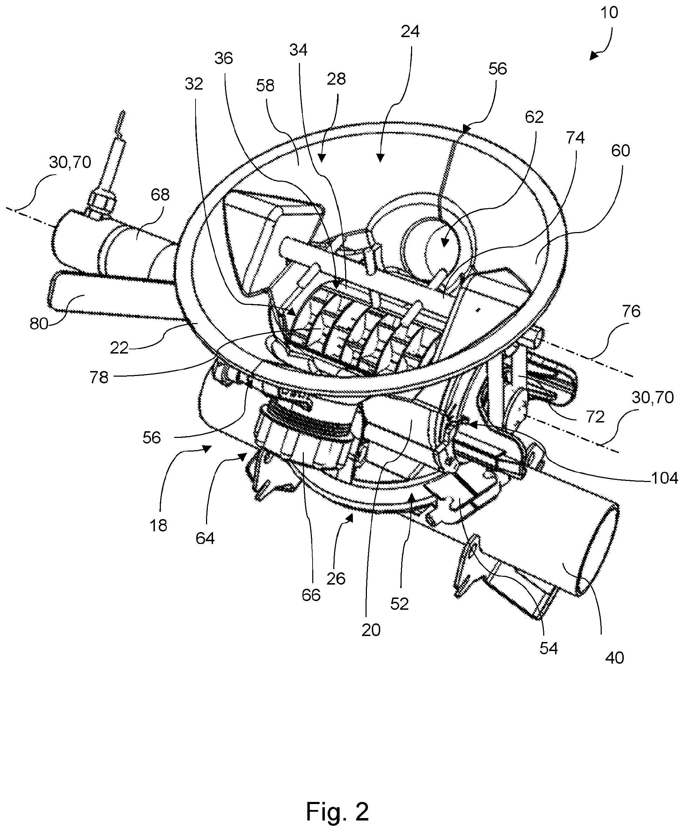

Eine perspektivische, schematische Ansicht einer Dosiervorrichtung 10 ist in Figur 2 dargestellt. Die Dosiervorrichtung 10 ist an ihrer Oberseite nicht mit dem Vorratsbehälter verbunden dargestellt, so dass ein Blick durch die Zulauföffnung 24 in das Innere des Dosiergehäuses 20 und die von diesem innenseitig ausgebildete Dosierkammer 28 gegeben ist. Die Zulauföffnung 24 ist innerhalb des kreisförmigen, ersten Befestigungsflansches 22 des Dosiergehäuses 20 angeordnet und wird von diesem umschlossen. Bodenseitig weist das Dosiergehäuses 20 den zweiten Befestigungsflansch 52 auf, welcher ebenfalls kreisförmig ausgebildet ist. Der zweite Befestigungsflansch 52 umschließt die innerhalb angeordnete erste Auslassöffnung 26, durch welche der körnige Feststoff in das Fördersystem 18 und die Verbindungsleitung 40 gelangt. Der zweite Befestigungsflansch 52 ist mittels eines den Befestigungsflansch 52 umschlingenden Befestigungsmittel 54 in Form eines Schnellspannverschlusses mit dem Fördersystem 18 lösbar verbunden.

Das Dosiergehäuse 20 weist dosierkammerseitig eine erste Ablauföffnung 62 und eine der ersten gegenüberliegende, zweite Ablauföffnung 64 auf, durch welche der körnige Feststoff aus dem Dosiergehäuse 20 abgelassen werden kann, beispielsweise um die Dosierkammer 28 zu entleeren. Die Ablauföffnungen 62, 64 sind mittels eines Ablaufstopfens 66 in Form einer abschraubbaren Kappe verschlossen. Die Ablauföffnungen 62, 64 sind in einer Trennebene 56 des mehrteilig ausgebildeten Dosiergehäuses 20 angeordnet. Das Dosiergehäuse 20 ist als zweiteiliges Gehäuse ausgeführt und weist einen ersten Teilkörper 58 und einen zweiten Teilkörper 60 auf. Die Teilkörper 58, 60 weisen die gleiche, insbesondere identische, Form auf, wodurch die Herstellkosten gesenkt werden können. Durch die Anordnung der Ablauföffnung 62, 64 in der Trennebene 56, können diese kostengünstig und ohne teure Formen mit einem Außengewinde zur Aufnahme eines Ablaufstopfens 66 geformt werden. Zudem können die Teilkörper 58, 60 an ihrer Trennebene 56 durch die Ablaufstopfen 66 gegen Relativbewegung zueinander gesichert werden.

Innerhalb des Dosiergehäuses 20 ist zwischen der mindestens einen Zulauföffnung 24 und der mindestens einen Auslassöffnung 26, bodenseitig der Dosierkammer 28, eine um eine Drehachse 30 rotierbare Fördereinrichtung 32 angeordnet. Die Fördereinrichtung 32 weist eine Anzahl an Förderelementen 78 in Form von Zellenrädern auf, welche in axialer Richtung entlang der Drehachse 30 benachbart zueinander angeordnet sind. Bei einer Rotation der Fördereinrichtung 32 wird körniger Feststoff aus der Dosierkammer 28 durch die mindestens eine Auslassöffnung 26 in das Fördersystem 18 gefördert. Eine Dosierung des körnigen Feststoffes erfolgt dabei in Abhängigkeit der montierten Förderelemente 78 und der Drehzahl der Fördereinrichtung 32. Die Förderelemente 78 können dabei gleichförmig oder unterschiedlich ausgestaltet oder im Teilungswinkel zueinander versetzt sein. Weiterhin wird die Dosierung durch die der Fördereinrichtung 32 zugeführte Menge an körnigem Feststoff beeinflußt werden. Hierfür weist die Fördereinrichtung 32 mindestens einen ersten Drehschieber 34 mit mindestens einer ersten Öffnung 36 zur Steuerung des Zulaufes des körnigen Feststoffes in die Fördereinrichtung 32 auf. Denkbar ist auch eine Steuerung des Auslasses des körnigen Feststoffes aus der Fördereinrichtung 32. Der erste Drehschieber 34 kann mittels eines Aktuators 80, motorisch oder, wie dargestellt, mittels eines manuell betätigbaren Hebels, verstellt werden.

Ein Antrieb der Fördereinrichtung 32 erfolgt motorisch mittels eines, beispielsweise, elektrischen, Antriebsmotors 68, welcher um eine Rotationsachse 70 rotiert. Die Rotationsachse 70 des Antriebsmotors 68 ist dabei koaxial zur Drehachse 30 der Fördereinrichtung 32 angeordnet, wodurch ein effizienter, seitenkräftefreier Antrieb der Fördereinrichtung 32 ermöglicht wird. Auf der dem Antriebsmotor 68 gegenüberliegenden Seite des Dosiergehäuses 20, ist ein Antrieb für die Rührwelle 74 angeordnet, welche um eine Rührachse 76 drehbar im Dosiergehäuse 20 gelagert ist. Über ein Verbindungselement 72 ist die Rührachse 76 mit der Drehachse 30 wirkverbunden, wodurch bei einer Drehbewegung der Drehachse 30 eine Drehbewegung der Rührachse 76 erfolgt. Mit dem Begriff Achse ist ebenfalls die jeweilige Welle, als mechanisches Bauteil, bezeichnet. Das Verbindungselement 72 kann in Form eines oder mehrerer Zahnradäder oder, wie in Figur 2 dargestellt, in Form eines Riementriebes ausgestaltet sein. Durch das Verbindungselement 72 kann zudem ein Übersetzungsverhältnis zwischen den Drehzahlen der Drehachse 30 und der Rührachse 76 erfolgen.

Die Förderelemente 78 der Fördereinrichtung 32 können axial auf die Drehachse 30 aufgeschoben werden, insbesondere in den ersten Drehschieber 34. Eine Verriegelung der Fördereinrichtung 32 zur Dosiereinrichtung 20 oder einem Drehschieber 34kann dabei mittels eines Bajonettverschlusses 104 erfolgen, welcher außenseitig an dem Dosiergehäuse 20 angebracht oder angeformt ist. Bei einem Bajonettverschluss werden an den jeweiligen miteinander zu verbindenden Komponenten zumindest ein, vorzugsweise mehrere, radial abstehende Formschlusselemente axial zueinander positioniert und durch Verdrehen gegeneinander gegen Lösen gesichert.

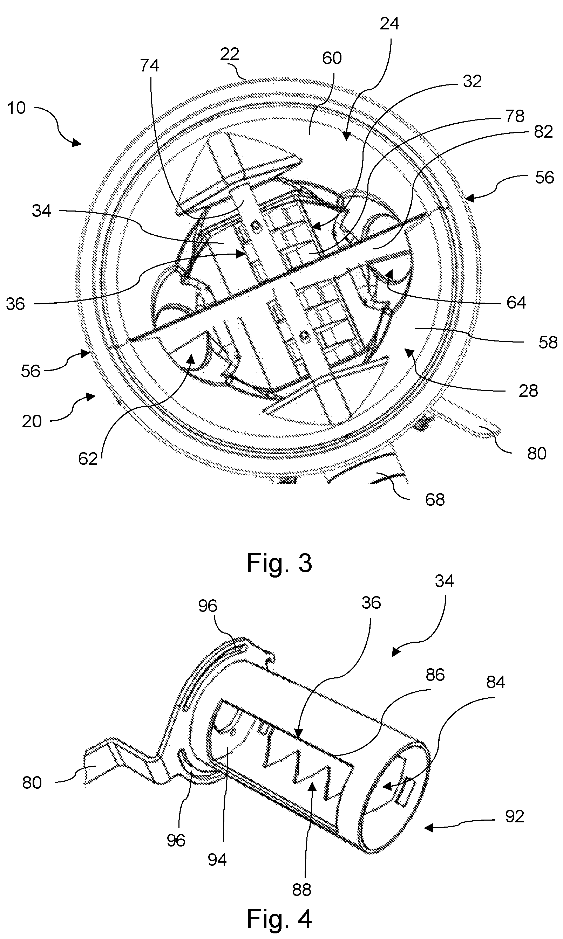

Eine schematische Draufsicht auf eine Dosiervorrichtung 10 mit einem innerhalb der Dosierkammer angeordneten Trennelement 82 ist in Figur 3 dargestellt. Das zweiteilige Dosiergehäuse 20 weist zwischen dem ersten Teilkörper 58 und dem zweiten Teilkörper 60 die Trennebene 56 auf. In der Trennebene 56 ist innerhalb der Dosierkammer 28 das Trennelement 82 angeordnet, welches die Dosierkammer 28 im Wesentlichen in zwei gleich große Teilkammern unterteilt. Dies ermöglicht in jeder Teilkammer einen anderen körnigen Feststoff, beispielsweise durch jeweils eine eigene Zulauföffnung 24 zugeführt, zu dosieren. Das Trennelement 82 kann dabei die Zulauföffnung 24 in zwei Zulauföffnungen unterteilen. Aufgrund der Anordnung und Ausgestaltung der ersten und zweiten Ablauföffnung 62, 64 in der Trennebene 56, werden die Ablauföffnungen 62, 64 ebenfalls durch das Trennelement 82 unterteil, so dass ein getrenntes Ablassen den körnigen Feststoffes aus den Teilkammern möglich ist. Die Rührwelle 74 durchdringt das Trennelement 82, so dass der Feststoff beiderseits des Trennelementes 82 aufgelockert werden kann. Über eine entsprechende Ausgestaltung der ersten Öffnung 36 des ersten Drehschiebers 36 ist eine getrennte oder gemeinsame Dosierung des körnigen Feststoffes aus den Teilkammern möglich.

Der erste Drehschieber ist in Figur 4 im Detail dargestellt. Der Drehschieber 34 ist im Wesentlichen in Form eines Rohrabschnittes mit einer aus der Mantelfläche ausgeschnittener erster Öffnung 36 ausgebildet. Bei einer Rotation des Drehschiebers 34 kann durch die Mantelfläche des Drehschiebers, insbesondere mit der mindestens ersten Öffnung 36, eine Querschnitt einer fördereinrichtungsseitige Öffnung der Dosierkammer vergrößert oder verkleinert werden, wodurch eine Zufuhr an körnigem Feststoff in die Fördereinrichtung gesteuert werden kann. Die erste Öffnung 36 weist, in axialer Richtung, zwei drehachsenparallele Kanten 86 auf, wodurch ein im Wesentlichen ungehinderter Zufluss an körnigem Feststoff in die Fördereinrichtung bewirkt werden kann. Der ersten Öffnung 36 gegenüberliegend ist in der Mantelfläche des ersten Drehschiebers 34 eine zweite Öffnung 84 angeordnet. Die zweite Öffnung 84 ist in einem montierten Zustand des Drehschiebers 34 mindestens einer Auslassöffnung zugeordnet. Die zweite Öffnung 84 weist entlang der Drehachse mindestens eine profilierte Kante 88 auf, wobei Profilierung in gezackter Form ausgebildet ist. Durch diese profilierte Kante 88 kann auslaßseitig eine pulsierende Abgabe von dosiertem, körnigen Feststoff vermieden werden.

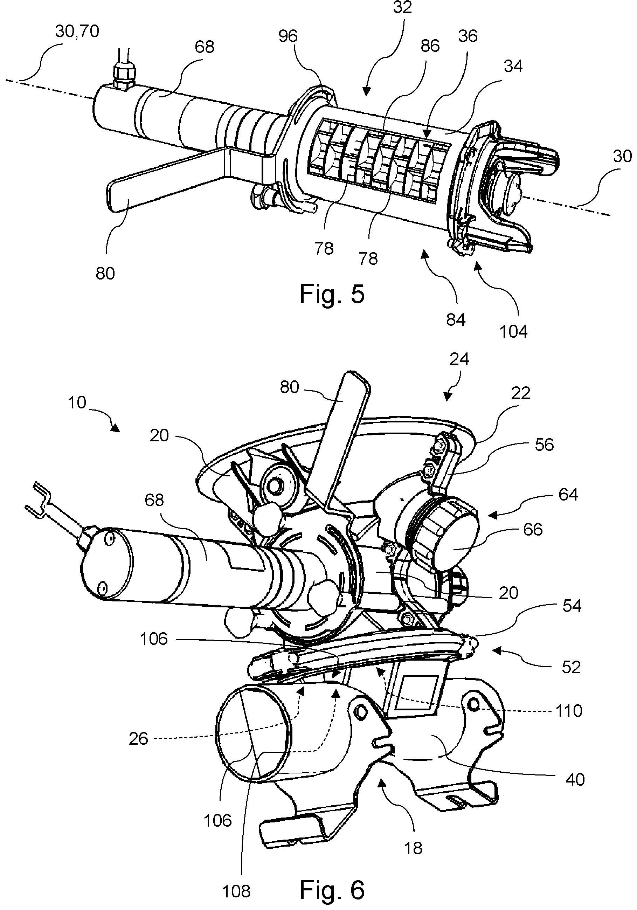

Der erste Drehschieber 34 weist zur Aufnahme von Förderelementen eine Aufnahmeöffnung 92 auf. Der Aufnahmeöffnung 92 gegenüberliegend ist der erste Drehschieber 34 zumindest teilweise durch eine Stirnwand 94 verschlossen, welcher auch als Anschlag für die aufgenommenen Förderelemente dient. Die Stirnwand 94 erstreckt sich in radialer Richtung über den Umfang des Drehschiebers 34 hinaus (Figur 5) und weist außenseitig einen manuell betätigbaren Aktuator 80 zur Verstellung des ersten Drehschiebers 34 auf. Radial außenseitig sind zudem in Umfangrichtung verlaufende Schlitze sowie weitere Durchbrüche angeordnet, welche der Befestigung des Antriebsmotors 68 an dem ersten Drehschieber 34 und/oder der Befestigung und Drehfixierung des Drehschiebers 34 an dem Dosiergehäuse 20 (Fig. 2) dienen. Der Antriebsmotor 68 ist dabei mit seiner Rotationsachse 70 koaxial zur Drehachse 30 der Fördereinrichtung 32 angeordnet. Die Förderelemente 78 sind innerhalb des ersten Drehschiebers 34 wie in einer Kassette angeordnet und werden auf der Seite der Aufnahmeöffnung 92 durch einen teilweise u-förmigen Deckel gehalten, welcher als Bajonettverschluss mit dem Dosiergehäuse 20 verbunden und durch eine Drehbewegung um die Drehachse 30 verriegelt werden kann.

Die in Figur 6 dargestellte Dosiervorrichtung 10 weist fördersystemseitig eine Trennvorrichtung 106 auf, welche die erste Auslassöffnung 26 von einer zweiten Auslassöffnung 108 des Dosiergehäuses 20 trennt. Dies ermöglicht fördersystemseitig eine gezielte Dosierung eines körnigen Feststoffes in die erste und/oder zweite Auslassöffnung 26, 108. Die Trennvorrichtung 106 erstreckt sich von der Fördereinrichtung 32 bis in das Fördersystem 18 und die Verbindungsleitung 40 hinein, wodurch die Verbindungsleitung 40 innenseitig durch die Trennvorrichtung 106 geteilt wird und ein Teil jeder Auslassöffnung 26, 108 zugeordnet ist. Weiterhin weist die Dosiervorrichtung 10 in dem Dosiergehäuse 20 eine Bypassöffnung 110 auf, welche an einer der Dosierkammer 28 gegenüberliegenden Seite der Fördereinrichtung 32 angeordnet ist. Die Bypassöffnung ist neben den Auslassöffnungen 26, 108 in dem Dosiergehäuse 20 angeordnet und ermöglicht das Herausfördern von körnigem Feststoff durch die Fördereinrichtung 32 aus der Dosierkammer 28 beispielsweise in die Umgebung, um eine Abdrehprobe vorzunehmen oder die Dosierkammer 28 zu leeren.

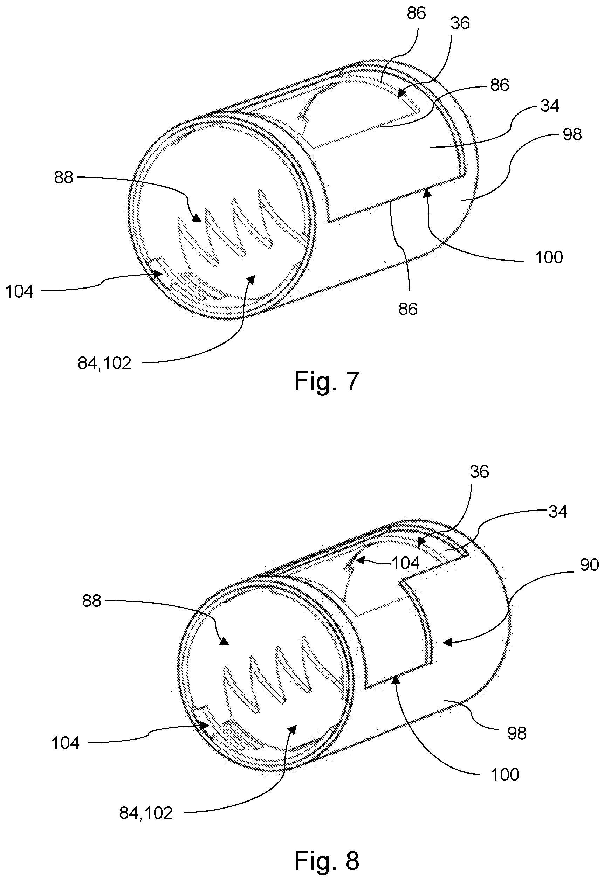

Eine Schaltung der ersten Auslassöffnung 26, der zweiten Auslassöffnung 108 und/oder der Bypassöffnung 110 kann mittels eines weiteren, beispielsweise eines zweiten, Drehschiebers 98 erfolgen, welcher in Figur 7 dargestellt ist. Der zweite Drehschieber 98 ist koaxial und radial benachbart, insbesondere kontaktierend, zu dem ersten Drehschieber 34 angeordnet. Der erste Drehschieber 34 ist dabei innerhalb des zweiten Drehschiebers 98 angeordnet. Der erste Drehschieber 34 weist die erste Öffnung 36 mit mindestens einer drehachsenparallelen Kante 86 zur Steuerung der zugeführten Menge an körnigem Feststoff in die Fördereinrichtung 32 auf. Über die zweite Öffnung 84 mit der profilierten Kante 88 erfolgt die stoßfreie Abgabe des dosierten Feststoffes in die mindestens eine Auslassöffnung (nicht dargestellt). Über den zweiten Drehschieber 98 erfolgt beispielsweise die Steuerung, ob der dosierte, körnige Feststoff in die erste Auslassöffnung, die zweite Auslassöffnung und/oder die Bypassöffnung abgegeben wird. Hierfür weist der zweite Drehschieber 98 zulaufseitig eine dritte Öffnung 100 auf, welche einen im Wesentlichen drehstellungsunabhängigen, ungehinderten Zulauf des Feststoffes ermöglicht. Der dritten Öffnung 100 gegenüberliegend ist eine vierte Öffnung 102 in der Mantelfläche des zweiten Drehschiebers 98 ausgebildet. Die vierte Öffnung 102 kann ebenfalls drehachsparallele Kanten (nicht dargestellt) aufweise und dient der Steuerung der Abgabe des dosierten Feststoffes in die jeweils gewählte Öffnung. Die dritte Öffnung 100 weist dabei einen größeren Querschnitt auf als die vierte Öffnung 102, da durch die dritte Öffnung 100 in jeder Stellung der vierten Öffnung 102 der ungehinderte Zufluß an körnigem Feststoff in die Fördereinrichtung gewährleistet sein soll.

Eine alternativ ausgestaltete Form des zweiten Drehschiebers 98 ist in Figur 8 dargestellt. Die zulaufseitige dritte Öffnung 100 des zweiten Drehschiebers 98 weist entlang der Drehachse eine stufenförmige Kante 90 auf. Hierdurch ist die Mantelfläche des zweiten Drehschiebers 98 in axialer Richtung betrachtet unterschiedlich weit ausgeschnitten. Die ermöglicht, beispielsweise bei einer durch ein Trennelement 82 (Fig. 3) geteilten Dosierkammer eine simultane oder wahlweise Zufuhr von körnigem Feststoff aus den jeweiligen Teilkammern in die Fördereinrichtung. Die in die Fördereinrichtung zugeführte Menge an körnigem Feststoff kann dabei weiterhin durch den ersten Drehschieber 34 und dessen erste Öffnung 36 gesteuert werden.

Ein weiterer Drehschieber kann koaxial und in radialer Richtung beabstandet zu dem ersten und/oder zweiten Drehschieber 34, 98 innerhalb des Dosiergehäuses 20 vorgesehen sein. Dieser weitere Drehschieber kann rohrförmig ausgestaltet sein, wobei beispielsweise nur ein Teil seiner Mantelfläche ausgebildet und/oder innerhalb des Dosiergehäuses 20, insbesondere der Dosierkammer 28, angeordnet sein kann.

Der weitere Drehschieber kann mit einem Abschnitt seiner Mantelfläche zwischen der Fördereinrichtung 32 und der mindestens einen Rührwelle 74 angeordnet sein. Hierdurch kann der weitere Drehschieber einen Druck des körnigen Feststoffes auf die Fördereinrichtung 32 verringern, wodurch Verstopfungen in der Dosierkammer 28 vermieden und die Zuführung des körnigen Feststoffes zu der Fördereinrichtung 32 verbessert werden kann.

**Bezugszeichen**

| | | | |
|---|---|---|---|
| 10 | Dosiervorrichtung | 62 | erste Ablauföffnung |
| 12 | landwirtschaftliche Maschine | 64 | zweite Ablauföffnung |
| 14 | Vorratsbehälter | 66 | Ablaufstopfen |
| 16 | Abgabeeinheit | 68 | Antriebsmotor |
| 18 | Fördersystem | 70 | Rotationsachse |
| 20 | Dosiergehäuse | 72 | Verbindungselement |
| 22 | erster Befestigungsflansch | 74 | Rührwelle |
| 24 | Zulauföffnung | 76 | Rührachse |
| 26 | Auslassöffnung | 78 | Förderelement |
| 28 | Dosierkammer | 80 | Aktuator |
| 30 | Drehachse | 82 | Trennelement |
| 32 | Fördereinrichtung | 84 | zweite Öffnung |
| 34 | erster Drehschieber | 86 | drehachsenparallele Kante |
| 36 | erste Öffnung | 88 | profilierte Kante |
| 38 | Gebläse | 90 | stufenförmige Kante |
| 40 | Verbindungsleitung | 92 | Aufnahmeöffnung |
| 42 | Förderrichtung | 94 | Stirnwand |
| 44 | Verteilvorrichtung | 96 | Schlitz |
| 46 | Verteilkammer | 98 | zweiter Drehschieber |
| 48 | Verteilöffnung | 100 | dritte Öffnung |
| 50 | Leitung | 102 | vierte Öffnung |
| 52 | zweiter Befestigungsflansch | 104 | Bajonettverschluß |
| 54 | Befestigungsmittel | 106 | Trennvorrichtung |
| 56 | Trennebene | 108 | zweite Auslassöffnung |
| 58 | erster Teilkörper | 110 | Bypass-Öffnung |
| 60 | zweiter Teilkörper | 112 | Sensor |
| | | 114 | Auswerteelektronik |

## Patentansprüche

1. Dosiervorrichtung (10) für eine landwirtschaftliche Maschine (12) zur Ausbringung von körnigen Feststoffen aus mindestens einem Vorratsbehälter (14) zu mindestens einer Abgabeeinheit (16) mittels eines, insbesondere pneumatischen, Fördersystems (18), mit einem Dosiergehäuse (20), wobei das Dosiergehäuse (20) mindestens einen vorratsbehälterseitigen und/oder fördersystemseitigen Befestigungsflansch (22, 52) sowie mindestens eine Zulauföffnung (24) und mindestens eine Auslassöffnung (26, 108) für den körnigen Feststoff aufweist, wobei der mindestens eine Befestigungsflansch (22, 52) als Vieleck oder kreisförmig ausgebildet ist, **dadurch gekennzeichnet, dass** das Dosiergehäuse (20) mehrteilig und aus zwei im Wesentlichen spiegelbildlichen und/oder formgleichen Teilkörpern (58, 60) ausgebildet ist.

2. Dosiervorrichtung nach Anspruch 1, **dadurch gekennzeichnet, dass** die mindestens eine Zulauföffnung (24) und/oder die mindestens eine Auslassöffnung (26, 108) innerhalb eines Befestigungsflansches (22, 52) angeordnet ist.

3. Dosiervorrichtung nach Anspruch 1 oder 2, **dadurch gekennzeichnet, dass** ein zweiter, dem ersten Befestigungsflansch (22) gegenüberliegender, Befestigungsflansch (52) vorgesehen ist, welcher als Vieleck oder kreisförmig ausgebildet ist.

4. Dosiervorrichtung nach einem der vorhergehenden Ansprüche, **dadurch gekennzeichnet, dass** der Befestigungsflansch (22, 52) derart ausgebildet ist, dass dieser mittels eines, insbesondere den Befestigungsflansch (22, 52) umschlingenden, Befestigungsmittels (54) montierbar ist.

5. Dosiervorrichtung nach Anspruch 4, **dadurch gekennzeichnet, dass** das Befestigungsmittel (54) in Form eines Schnellspannverschlusses ausgebildet ist.

6. Dosiervorrichtung nach einem der vorhergehenden Ansprüche, **dadurch gekennzeichnet, dass** das Dosiergehäuse (20) innenseitig eine Dosierkammer (28) ausbildet, wobei zwischen Dosierkammer (28) und dem Fördersystem (18) eine, um eine Drehachse (30), rotierende Fördereinrichtung (32) angeordnet ist, wobei die Fördereinrichtung (32) die mindestens eine Zulauföffnung (24) und die mindestens eine Auslassöffnung (26), insbesondere druckdicht, voneinander trennt.

7. Dosiervorrichtung nach Anspruch 6, **dadurch gekennzeichnet, dass** eine Trennebene (56) der Teilkörper (58, 60) des Dosiergehäuses (20) im Wesentlichen unter einem Winkel zu der Drehachse (30) angeordnet ist.

8. Dosiervorrichtung nach Anspruch 7, **dadurch gekennzeichnet, dass** das Dosiergehäuse (20) mindestens eine Ablauföffnung (62) aufweist, welche insbesondere in der Trennebene (56) der Teilkörper (58, 60) des Dosiergehäuses (20) angeordnet ist.

9. Dosiervorrichtung nach einem der vorhergehenden Ansprüche, **dadurch gekennzeichnet, dass** das Dosiergehäuses (20) eine Dosierkammer (28) ausbildet und innerhalb der Dosierkammer (28) mindestens ein, insbesondere lösbares, Trennelement (82) angeordnet ist.

10. Dosiervorrichtung nach einem der Ansprüche 6 bis 8, **dadurch gekennzeichnet, dass** das Dosiergehäuse (20) fördersystemseitig der Fördereinrichtung (32) eine weitere Auslassöffnung (108) und/oder eine Bypassöffnung (110) aufweist.

11. Dosiervorrichtung nach einem der Ansprüche 6-8 oder 10, **dadurch gekennzeichnet, dass** fördersystemseitig der Fördereinrichtung (32) eine Trennvorrichtung (106) vorgesehen ist.

12. Dosiervorrichtung nach einem der Ansprüche 6 oder 9, **dadurch gekennzeichnet, dass** innerhalb der Dosierkammer (28), insbesondere vorratsbehälterseitig, mindestens eine antreibbare Rührwelle (74) angeordnet ist.

13. Landwirtschaftliche Maschine zur Ausbringung von körnigen Feststoffen mit einem, insbesondere pneumatischen, Fördersystem (18) zur Beförderung der körnigen Feststoffe aus einem Vorratsbehälter (14) zu einer Anzahl von Abgabeeinheiten (16) mit mindestens einer Dosiervorrichtung (10) gemäß einem der Ansprüche 1 bis 12.

14. Landwirtschaftliche Maschine nach Anspruch 13, **dadurch gekennzeichnet, dass** der mindestens einen Dosiervorrichtung (10) eine oder mehrere Abgabeeinheiten (16) und/oder Verteilvorrichtungen (44) zugeordnet sind.

## Claims

1. A metering device (10) for an agricultural machine (12) for outputting granular solids from at least one storage container (14) to at least one dispensing unit (16) by means of a, in particular pneumatic, conveyor system (18), having a metering housing (20), wherein the metering housing (20) comprises at least one mounting flange (22, 52) on the storage container side and /or on the conveyor system side as well as at least one inflow opening (24) and at least one discharge opening (26, 108) for the granular solid, wherein at least one mounting flange (22, 52 ) is formed as a polygon or circular, **characterised in that** the metering housing (20) is formed in multiple parts and out of two, in particular, substantially mirrored and/or identically shaped sub-bodies (58, 60).

2. The metering device according to Claim 1, **characterised in that** the at least one inflow opening (24) and/or the at least one discharge opening (26, 108) is arranged within a mounting flange (22, 52).

3. The metering device according to Claim 1 or 2, **characterised in that** a second mounting flange (52) located opposite the first mounting flange (22) is provided, which is formed as a polygon or circular.

4. The metering device according to any one of the preceding claims, **characterised in that** the mounting flange (22, 52) is formed in such a manner that the same can be mounted by way of a fastening means (54), which in particular wraps around the mounting flange (22, 52).

5. The metering device according to claim 4, **characterised in that** the fastening means (54) is designed in the form of a quick release closure.

6. The metering device according to any one of the preceding claims, **characterised in that** the metering housing (20) forms a metering chamber (28) on the inside, wherein between metering chamber (28) and the conveyor system (18), a conveyor device (32) rotating about a rotary axis (30) is arranged, wherein the conveyor device (32) separates the at least one inflow opening (24) and the at least one discharge opening (26), in particular in a pressure-tight manner.

7. The metering device according to claim 6, **characterised in that** a separating plane (56) of the sub-bodies (58, 60) of the metering housing (20) is substantially arranged at an angle to the rotary axis (30).

8. The metering device according to claim 7, **characterised in that** the metering housing (20) comprises at least one drain opening (62) which is arranged in particular in the separating plane (56) of the sub-bodies (58, 60) of the metering housing (20).

9. The metering device according to any one of the preceding claims, **characterised in that** the metering housing (20) forms a metering chamber (28) and at least one, in particular detachable, separating element (82) is arranged within the metering chamber (28).

10. The metering device according to any one of the claims 6 to 8, **characterised in that** the metering housing (20) comprises a further discharge opening (108) and/or a bypass opening (110) on the conveyor system-side of the conveyor device (32).

11. The metering device according to any one of the claims 6 to 8 or 10, **characterised in that** a separating device (106) is provided on the conveyor system-side of the conveyor device (32).

12. The metering device according to any one of the claims 6 or 9, **characterised in that** within the metering chamber (28), in particular on the storage containerside, at least one driveable agitator shaft (74) is arranged.

13. An agricultural machine for outputting granular solids having, in particular, a pneumatic conveyor system (18) for conveying the granular solids out of a storage container (14) to a number of dispensing units (16) with at least one metering device (10) according to any one of the Claims 1 to 12.

14. The agricultural machine according to Claim 13, **characterised in that** the at least one metering device (10) is assigned one or multiple dispensing units (16) and/or distribution devices (44).

## Revendications

1. Dispositif de dosage (10) pour une machine agricole (12) destiné à l'épandage de matières solides granulaires depuis au moins un réservoir de stockage (14) vers au moins une unité de distribution (16) au moyen d'un système de transport (18), notamment pneumatique, comprenant un boîtier de dosage (20), ledit boîtier de dosage (20) comportant au moins une bride de fixation (22, 52) côté réservoir et/ou côté système de transport, ainsi qu'au moins une ouverture d'entrée (24) et au moins une ouverture de sortie (26, 108) pour la matière solide granulaire, dans lequel ladite au moins bride de fixation (22, 52) est de forme polygonale ou circulaire, **caractérisé en ce que** le boîtier de dosage (20) est en plusieurs parties et est constitué de deux symétriques et/ou de forme identique (58, 60).

2. Dispositif de dosage selon la revendication 1, **caractérisé en ce que** l'au moins une ouverture d'entrée (24) et/ou l'au moins une ouverture de sortie (26, 108) est disposée à l'intérieur d'une bride de fixation (22, 52).

3. Dispositif de dosage selon la revendication 1 ou 2, **caractérisé en ce qu'**il est prévu une deuxième bride de fixation (52), située en face de la première bride de fixation (22), qui est de forme polygonale ou circulaire.

4. Dispositif de dosage selon l'une des revendications précédentes, **caractérisé en ce que** la bride de fixation (22, 52) est conçue de telle sorte que **en ce qu'**il peut être monté à l'aide d'un moyen de fixation (54) s'enroulant notamment autour de la bride de fixation (22, 52).

5. Dispositif de dosage selon la revendication 4, **caractérisé en ce que** le moyen de fixation (54) se présente sous la forme d'une fermeture à serrage rapide.

6. Dispositif de dosage selon l'une des revendications précédentes, **caractérisé en ce que** le boîtier de dosage (20) forme à l'intérieur une chambre de dosage (28), un dispositif de transport (32) tournant autour d'un axe de rotation (30) étant disposé entre la chambre de dosage (28) et le système de transport (18), disposé entre la chambre de dosage (28) et le système de transport (18), le dispositif de transport (32) séparant l'au moins une ouverture d'entrée (24) et l'au moins une ouverture de sortie (26) l'une de l'autre, en particulier de manière étanche à la pression.

7. Dispositif de dosage selon la revendication 6, **caractérisé en ce qu'**un plan de séparation (56) des parties (58, 60) du boîtier de dosage (20) est disposé sensiblement selon un angle par rapport à l'axe de rotation (30).

8. Dispositif de dosage selon la revendication 7, **caractérisé en ce que** le boîtier de dosage (20) comporte au moins un orifice d'évacuation (62) qui est notamment disposé dans le plan de séparation (56) des parties (58, 60) du boîtier de dosage (20).

9. Dispositif de dosage selon l'une des revendications précédentes, **caractérisé en ce que** le boîtier de dosage (20) forme une chambre de dosage (28) et qu'au moins un élément de séparation (82), notamment amovible, est disposé à l'intérieur de la chambre de dosage (28).

10. Dispositif de dosage selon l'une des revendications 6 à 8, **caractérisé en ce que** le boîtier de dosage (20) présente, du côté du système de transport du dispositif de transport (32), une autre ouverture de sortie (108) et/ou une ouverture de dérivation (110).

11. Dispositif de dosage selon l'une des revendications 6 à 8 ou 10, **caractérisé en ce qu'**un dispositif de séparation (106) est prévu du côté du système de transport du dispositif de transport (32).

12. Dispositif de dosage selon l'une des revendications 6 ou 9, **caractérisé en ce qu'**au moins un arbre d'agitation (74) pouvant être entraîné est disposé à l'intérieur de la chambre de dosage (28), en particulier du côté du réservoir de stockage.

13. Machine agricole destinée à l'épandage de matières solides granulaires, comprenant un système de transport (18), notamment pneumatique, pour acheminer les matières solides granulaires depuis un réservoir (14) vers un certain nombre d'unités de distribution (16) comportant au moins un dispositif de dosage (10) selon l'une des revendications 1 à 12.

14. Machine agricole selon la revendication 13, **caractérisée en ce qu'**une ou plusieurs unités de distribution (16) et/ou dispositifs de répartition (44) sont associés au moins un dispositif de dosage (10).
